**Europäisches Patentamt**

**European Patent Office**

**Office européen des brevets**

(19)

(11) **EP 1 492 184 A1**

(12) **EUROPÄISCHE PATENTANMELDUNG**

(43) Veröffentlichungstag:
**29.12.2004 Patentblatt 2004/53**

(51) Int Cl.⁷: $H01M\ 4/88$, $H01M\ 8/10$

(21) Anmeldenummer: **03014405.9**

(22) Anmeldetag: **27.06.2003**

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(71) Anmelder: **Umicore AG & Co. KG**
**63457 Hanau-Wolfgang (DE)**

(72) Erfinder:
• **Hohenthanner, Claus-Rupert Dr.**
**63457 Hanau (DE)**

• **Kühnhold, Heike**
**63486 Bruchköbel (DE)**
• **Barth, Bernhardt**
**33615 Bielefeld (DE)**
• **Seipel, Peter**
**63755 Alzenau (DE)**

(74) Vertreter: **VOSSIUS & PARTNER**
**Siebertstrasse 4**
**81675 München (DE)**

(54) **Verfahren zur Herstellung einer katalysatorbeschichteten Polymerelektrolyt-Membran**

(57)     Die Erfindung betrifft ein Verfahren zur Herstellung einer katalysatorbeschichteten Polymerelektrolytmembran für elektrochemische Vorrichtungen. Das Verfahren ist dadurch gekennzeichnet, daß eine Polymerelektrolytmembran verwendet wird, die auf der Rückseite mit einer ersten Stützfolie verbunden ist. Nach der Beschichtung der Vorderseite wird eine zweite Stützfolie auf der Vorderseite angebracht, die erste Stützfolie entfernt und anschließend die zweite Katalysatorschicht auf die Rückseite aufgebracht. Bei dem Verfahren ist die Membran bei allen Beschichtungsstufen mit mindestens einer Stützfolie verbunden. Man erhält glatte, faltenfrei beschichtete Membranen in einem kontinuierlichen Prozess mit hoher Produktionsgeschwindigkeit.

    Die dreilagige katalysatorbeschichtete Membran findet Verwendung in elektrochemischen Vorrichtungen wie PEM-Brennstoffzellen, Direktmethanolbrennstoffzellen (DMFC) oder Elektrolyseuren.

Polymerelektrolyt-Membran
mit erster Stützfolie
(Rückseite)

↓

a) Beschichtung der Vorderseite und Trocknung

↓

b) Anbringen einer zweiten Stützfolie auf der Vorderseite

↓

c) Entfernung der ersten Stützfolie von der Rückseite

↓

d) Beschichtung der Rückseite und Trocknung

↓

Weitere Verarbeitungsschritte

**Figur 1**

EP 1 492 184 A1

Printed by Jouve, 75001 PARIS (FR)

**Beschreibung**

Die Erfindung betrifft ein Verfahren zur Herstellung einer katalysatorbeschichteten Polymerelektrolyt-Membran (engl. "catalyst coated membrane", "CCM") für elektrochemische Vorrichtungen, wie beispielsweise Brennstoffzellen, elektrochemische Sensoren oder Elektrolyseure. Weiterhin umfaßt die Erfindung die Verwendung dieser katalysatorbeschichteten Membran zur Fertigung von Membran-Elektroden-Einheiten ("MEEs") und Brennstoffzellenstacks.

Brennstoffzellen wandeln einen Brennstoff und ein Oxidationsmittel örtlich voneinander getrennt an zwei Elektroden in Strom, Wärme und Wasser um. Als Brennstoff kann Wasserstoff, Methanol oder ein wasserstoffreiches Gas, als Oxidationsmittel Sauerstoff oder Luft dienen. Der Vorgang der Energieumwandlung in der Brennstoffzelle zeichnet sich durch eine große Schadstofffreiheit und einen besonders hohen Wirkungsgrad aus. Aus diesem Grunde gewinnen Brennstoffzellen zunehmend Bedeutung für alternative Antriebskonzepte, Hausenergieversorgungsanlagen sowie portable Anwendungen.

Die Membranbrennstoffzellen, beispielsweise die Polymerelektrolyt-Brennstoffzelle (engl.: "polymer electrolyte membrane fuel cell", "PEMFC") und die Direkt-Methanol-Brennstoffzelle (engl. "direct methanol fuel cell", "DMFC") eignen sich aufgrund ihrer niedrigen Betriebstemperatur, ihrer kompakten Bauweise und ihrer Leistungsdichte für viele mobile und stationäre Einsatzbereiche.

PEM-Brennstoffzellen sind in einer stapelweisen Anordnung ("Stack") aus vielen Brennstoffzelleneinheiten aufgebaut. Diese sind zur Erhöhung der Betriebsspannung elektrisch in Reihe geschaltet.

Das Kernstück einer PEM-Brennstoffzelle ist die sogenannte Membran-Elektroden-Einheit ("MEE"). Die MEE besteht aus der protonenleitenden Membran (Polymerelektrolyt- oder Ionomermembran), den beiden Gasverteilersubstraten (engl. "gas diffusion layers", "GDLs") an den Membranseiten und den zwischen Membran und Gasverteilersubstraten liegenden Elektrodenschichten. Eine der Elektrodenschichten ist als Anode für die Oxidation von Wasserstoff und die zweite Elektrodenschicht als Kathode für die Reduktion von Sauerstoff ausgebildet.

Die Polymerelektrolyt-Membran besteht aus protonenleitenden Polymermaterialien. Diese Materialien werden im folgenden auch kurz als Ionomere bezeichnet. Bevorzugt wird ein Tetrafluorethylen-Fluorvinylether-Copolymer mit Sulfonsäuregruppen verwendet. Dieses Material wird zum Beispiel unter dem Handelsnamen Nafion® von DuPont vertrieben. Es sind jedoch auch andere, insbesondere fluorfreie Ionomermaterialien, wie dotierte sulfonierte Polyetherketone oder dotierte sulfonierte oder sulfinierte Arylketone bzw. Polybenzimidazole einsetzbar. Geeignete Ionomermaterialien sind von O. Savadogo in "Journal of New Materials for Electrochemical Systems" I, 47-66 (1998) beschrieben. Für die Verwendung in Brennstoffzellen benötigen diese Membranen im allgemeinen eine Dicke zwischen 10 und 200 µm.

Die Elektrodenschichten für Anode und Kathode enthalten ein protonenleitendes Polymer und Elektrokatalysatoren, welche die jeweilige Reaktion (Oxidation von Wasserstoff beziehungsweise Reduktion von Sauerstoff) katalytisch unterstützen. Als katalytisch aktive Komponenten werden bevorzugt die Metalle der Platingruppe des Periodensystems der Elemente eingesetzt. In der Mehrzahl verwendet man sogenannte Trägerkatalysatoren, bei denen die katalytisch aktiven Platingruppenmetalle in hochdisperser Form auf die Oberfläche eines leitfähigen Trägermaterials, beispielsweise Ruß, aufgebracht wurden.

Die Gasverteilersubstrate (GDLs) bestehen gewöhnlich aus Kohlefaserpapier oder Kohlefasergewebe und ermöglichen einen guten Zugang der Reaktionsgase zu den Reaktionsschichten sowie eine gute Ableitung des Zellenstroms und des sich bildenden Wassers.

Die vorliegende Erfindung befasst sich mit der Herstellung von dreilagigen, katalysatorbeschichteten Membranen (CCMs) durch direkte Beschichtungsverfahren. Zur Herstellung solcher katalysatorbeschichteten Membranen ("3-layer CCMs") werden die Elektrodenschichten zumeist unter Verwendung einer Paste durch Drucken, Rakeln, Walzen oder Sprühen auf die Vorder- und Rückseite einer Polymerelektrolyt-Membran aufgebracht. Die pastenförmigen Zubereitungen werden im folgenden auch als Tinten oder Katalysatortinten bezeichnet. Sie enthalten neben dem Katalysator in der Regel ein protonenleitendes Material, verschiedene Lösungsmittel sowie gegebenenfalls feinverteilte hydrophobe Materialien, Additive und Porenbildner.

Die Kommerzialisierung der PEM-Brennstoffzellentechnologie erfordert großtechnische Produktionsverfahren für katalysatorbeschichtete Membranen (CCMs) und Membran-Elektrodeneinheiten (MEEs), damit diese in hoher Stückzahl für mobile, stationäre und portable Anwendungen verfügbar sind. Nachfolgende Druckschriften sollen den Stand der Technik auf diesem Gebiet verdeutlichen.

In der WO 97/23919 wird ein Verfahren zur Herstellung von Membran-Elektrodeneinheiten beschrieben, wobei das Verbinden der Polymerelektrolyt-Membran, der Elektrodenschichten und der Gasverteilersubstrate kontinuierlich in einem Walzverfahren durchgeführt wird. Dieses Verfahren bezieht sich auf die Herstellung von fünflagigen MEEs, eine Beschichtung der Ionomermembran ist (CCM-Herstellung) nicht erwähnt.

Aus der EP 1 198 021 ist ein kontinuierliches Verfahren zur Herstellung von fünflagigen MEEs bekannt, bei dem während des Aufbringens der Katalysatorschicht die jeweils gegenüberliegende Seite der Membran gestützt wird.

Im Unterschied zum erfindungsgemäßen Verfahren wird die jeweils gegenüberliegende Seite der Membran beim Druckprozess durch ein bandförmiges Gasverteilersubstrat (nicht durch eine temporär angebrachte Folie) gestützt. Das bandförmige Gasveerteilersubstrat verbleibt dann als Komponente in der fünflagigen MEE.

In der EP 1 037 295 wird ein kontinuierliches Verfahren zum selektiven Aufbringen von Elektrodenschichten auf eine bandförmige Ionomermembran beschrieben, bei dem Vorder- und Rückseite der Membran bedruckt werden. Die Membran muß dabei einen bestimmten Wassergehalt (von 2 bis 20 Gew.%) aufweisen. Bedingt durch die Quellung und Dimensionsänderung der Membran während des Beschichtungsprozesses ist die Positioniergenauigkeit zwischen Vorder- und Rückseitendruck, besonders bei dünnen Membranen (unter 50 µm Dicke) kritisch.

Die US 6,074,692 beschreibt ein kontinuierliches Verfahren zur Beschichtung einer Ionomermembran. Die Membran wird dabei in einem organischen Lösungsmittel vorgequollen, anschließend beschichtet und dann während des Trocknungsprozesses mit Klammern am Schrumpfen gehindert.

Die WO 02/43171 schlägt ein flexographisches Druckverfahren vor, bei dem eine dünne Schicht Katalysator von einer trommelförmigen Druckvorrichtung auf die Membran übertragen wird. Durch das Aufbringen zahlreicher sehr dünner Schichten versucht man, das Quellen der Membran zu reduzieren.

Auch die JP 2001 160 405 offenbart einen Prozess zur Herstellung von katalysatorbeschichteten Ionomermembranen. Dabei wird die Membran auf einer Trägerfolie befestigt, die nach der Beschichtung der Vorderseite und der Trocknung entfernt wird. Vor der Beschichtung der Rückseite wird die Membran auf einer weiteren Trägersubstrat befestigt. Als Trägersubstrat werden Folien aus Polyester oder Teflon, aber auch Glasplatten vorgeschlagen. Die Handhabung der Membran bei der Beschichtung von Vorder- und Rückseite erfolgt in ungestützter Form, das Verfahren ist nicht kontinuierlich und damit für die Serienfertigung von katalysatorbeschichteten Membranen nicht geeignet.

Die großtechnische Herstellung von dreilagigen, katalysatorbeschichteten Ionomermembranen (CCMs) bereitet nach wie vor Probleme, die auch durch die bisher beschriebenen Maßnahmen noch nicht zufriedenstellend gelöst sind. Insbesondere das Quellen der Membran bei der Beschichtung mit lösungsmittelhaltigen Tinten, die Schrumpfung bei den nachfolgenden Trocknungsschritten sowie die große Empfindlichkeit der Membranen bei Handhabung und Verarbeitung stellen große Herausforderungen an ein geeignetes kontinuierliches Fertigungsverfahren dar.

Aufgabe der vorliegenden Erfindung ist es daher, ein verbessertes Verfahren zur Herstellung von katalysatorbeschichteten Polymerelektrolytmembranen anzugeben, das die beschriebenen Nachteile des Standes der Technik überwindet.

Diese Aufgabe wird durch das Verfahren gemäß Anspruch 1 und eine entsprechende Vorrichtung gelöst. Vorteilhafte Ausführungsformen werden in den Unteransprüchen beschrieben. Weitere Ansprüche beziehen sich auf die Verwendung der gemäß dem Verfahren hergestellten katalysatorbeschichteten Polymerelektrolytmembranen zur Herstellung von Membran-Elektrodeneinheiten für elektrochemische Vorrichtungen, beispielsweise Brennstoff-zellen oder Elektrolyseure.

Das erfindungsgemäße Verfahren besteht aus mehreren Schritten und ist dadurch gekennzeichnet, daß

(a) die Vorderseite einer bandförmigen, auf der Rückseite mit einer ersten Stützfolie versehenen Polymerelektrolytmembran mit einer Katalysatortinte beschichtet und bei erhöhter Temperatur getrocknet wird,

(b) eine zweite Stützfolie auf der Vorderseite der Polymerelektrolytmembran angebracht wird,

(c) die erste Stützfolie von der Rückseite der Polymerelektrolytmembran entfernt wird,

(d) anschließend die Rückseite der Polymerelektrolytmembran mit einer Katalysatortinte beschichtet und bei erhöhter Temperatur getrocknet wird.

Die zweite Stützfolie auf der Vorderseite der Membran kann bei Bedarf sofort oder aber erst im Laufe von weiteren Verarbeitungsschritten entfernt werden. Weitere Verarbeitungsschritte umfassen beispielsweise die Nachbehandlung der CCM in einem Wasserbad, das Zusammenfügen der CCM mit Gasverteilerschichten (GDLs) zu fünflagigen MEEs oder aber das Verbinden der CCM mit Schutzfilmen und/oder Dichtungskomponenten. Generell kann die zweite Stützfolie, wenn eine bessere Handhabung im Prozess das erfordert, auf der Polymerelektrolytmembran verbleiben und erst beim abschließenden Zusammenbau der MEE bzw. des Brennstoffzellen-Stacks entfernt werden.

Vorzugsweise werden bandförmige Ionomermembranen verwendet, die im Anlieferzustand auf der Rückseite bereits mit einer ersten Stützfolie ausgerüstet sind. Solche Produkte sind mittlerweile von verschiedenen Membranherstellern erhältlich. Soll eine ungestützte bandförmige Membran im erfindungsgemäßen Prozess eingesetzt werden, so wird diese in einem vorgelagerten Verfahrensschritt durch einen einfachen Laminierprozess auf der Rückseite mit einer ersten Stützfolie versehen.

In der ersten Verfahrensstufe (a) wird die so gestützte Membran auf der Vorderseite mit einer Katalysatortinte beschichtet. Nach der Trocknung der Katalysatortinte wird im zweiten Schritt (b) auf der Vorderseite der beschichteten Membran eine zweite Stützfolie angebracht und anschließend im dritten Schritt (c) die erste Stützfolie auf der Membranrückseite entfernt. Die Schritte (b) und (c) werden in der vorliegenden Anmeldung zusammenfassend auch als "Umlamination" bezeichnet.

In einer abschließenden Verfahrensstufe (d) wird die Rückseite der Membran beschichtet und anschließend getrocknet.

Die zweite Stützfolie auf der Vorderseite der Membran kann, wie bereits ausgeführt, nach Bedarf sofort oder aber im Laufe von späteren Verabeitungsschritten entfernt werden.

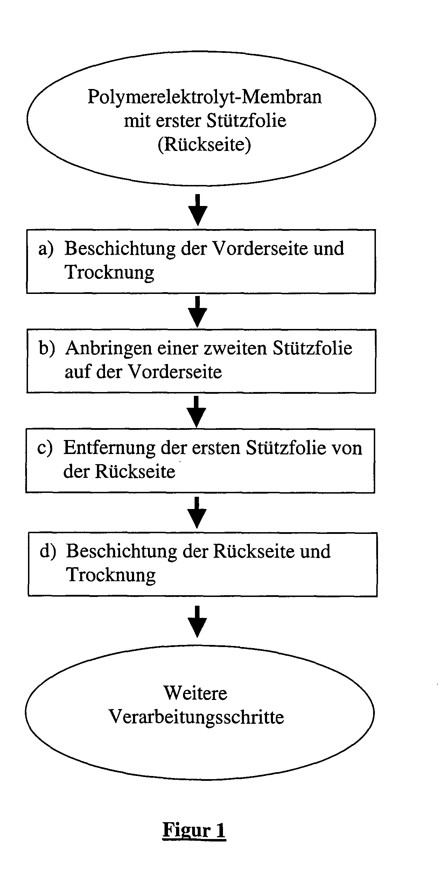

Der erfindungsgemäße Verfahrensablauf ist in **Figur 1** schematisch dargestellt.

Ein Kennzeichen des erfindungsgemäßen Verfahrens ist der kontinuierliche Verfahrensablauf unter Verwendung von bandförmigen Substraten. Sowohl die Polymerelektrolytmembran als auch die Stützfolien können in Bandform eingesetzt werden.

Ein weiteres Kennzeichen des erfindungsgemäßen Verfahrens ist das Anbringen einer zweiten Stützfolie auf der Vorderseite der Membran vor der rückseitigen zweiten Beschichtung. In einer bevorzugten Ausführungsform erfolgt das Anbringen der zweiten Stützfolie dabei vor dem Entfernen (Delaminieren) der ersten Stützfolie. Dadurch werden Probleme bei der Delamination der ersten Stützfolie (beispielsweise durch Spannungen, Faltenbildung, Durchhängen etc) vermieden. Durch das erfindungsgemäße Verfahren wird erreicht, dass die Membran in allen Stufen des Verfahrens mit mindestens einer Stützfolie verbunden ist (d.h. in gestützter Form vorliegt) und somit wirtschaftlich und rationell (d.h. in hoher Geschwindigkeit und hoher Qualität) verarbeitet werden kann. Man erhält glatte, faltenfrei und passergenau beschichtete Polymerelektrolytmembranen.

In einer speziellen Ausführungsform des erfindungsgemäßen Verfahrens kommen gelochte bzw. perforierte Folien als Stützfolie zum Einsatz. Die verwendete Perforations- und Lochungstechnik hat dabei Einfluß auf die Laminiereigenschaften der Stützfolie. Es können Punkt-und Schlitzlochungen verwendet werden, welche mittels Stanzen, Lochen, Heissnadel- oder Flammperforationsverfahren, aber auch elektrostatisch erzeugt werden können. Typische Lochbilder sind 5 bis 20 Löcher pro Quadratzentimeter ($cm^2$) Folie, wobei die Löcher einen Durchmesser im Bereich von ca. 0,2 mm bis 3 mm besitzen können. Unter der Bezeichnung "Löcher" werden aber auch alle anderen, beispielsweise nicht runden Ausstanzungen oder Aussparungen in der Stützfolie verstanden.

Es hat sich gezeigt, dass bei Verwendung einer perforierten Stützfolie die Membran wesentlich geringere Verzugserscheinungen und/oder Faltenbildung zeigt. Offenbar wird durch die Löcher bzw. Öffnungen der perforierten Stützfolie beim Trocknungsprozess nach der Beschichtung das Lösungsmittel besser entfernt. Die gelochte Stützfolie erlaubt darüberhinaus, dass sich die Membran nach der Beschichtung einer Seite aufgrund des eingebrachten Lösungsmittels etwas aufquellen und im anschließenden Trocknungsprozess wieder zusammenziehen kann. Vor allem bei größeren Druckformaten (d.h. CCMs mit aktiver Fläche größer 200 $cm^2$) und bei ganzflächigem Druck, sowie bei der Verwendung von dünnen Ionomermembranen (unter 50 µm Dicke) wirkt sich diese Maßnahme vorteilhaft aus.

Zum Anbringen der Stützfolien auf der Polymerelektrolytmembran kommen kontuinuierliche Laminierverfahren unter Verwendung von Walzen oder Pressen in einem weiten Temperatur- bzw. Druckbereich zum Einsatz. Je nach Materialkombination der zu verbindenden Folien ist zum Laminieren der Stützfolie kein Hilfsstoff erforderlich, da die Adhäsionskräfte zwischen Stützfolie und Membran schon für ausreichende Verbindung sorgen. Sollte jedoch für bestimmte Materialkombinationen eine verbesserte Haftung zwischen Stützfolie und Membran wünschenswert sein, können sogenannte Haftvermittler im Randbereich der beschichteten Membranseite eingesetzt werden. Dabei können zum Beispiel Flüssigklebstoffe oder Klebebänder verwendet werden. Die Laminierbedingungen werden entsprechend angepasst. Auch das Verfahren der Heissnadelperforation kann zur Haftungsverbesserung herangezogen werden. Dabei wird die zu befestigende Stützfolie mit der Membran am Einstichbereich der Heissnadel miteinander verschmolzen und eine gute Adhäsion hergestellt.

Als Stützfolie für Vorder- und Rückseite eignen sich Folien aus Polyester, Polyethylen, Polytetrafluorethylen (PTFE), Polypropylen (PP), Polyvinylchlorid (PVC), Polycarbonat, Polyamid, Polyimid, Polyurethan oder aus vergleichbaren Folienmaterialien. Es können darüberhinaus auch Verbundfolien, beispielsweise aus Polyester/Polyethylen, Polyamid/Polyethylen, Poly-amid/Polyester, Polyester/Papier, Polyethylen/Aluminium usw. verwendet werden. Weiterhin sind auch Metallfolien und Papierfolien einsetzbar. Die verwendeten Folienwerkstoffe haben eine Materialstärke von 10 bis 250 µm. Die Bahnbreite geht bis max. 750 mm. Als Materialien für die zweite Stützfolie können grundsätzlich dieselben Folien verwendet werden, die als erste Stützfolie zum Einsatz kommen.

Geeignete Anlagen zur kontinuierlichen Bearbeitung, Beschichtung und Laminierung von bandförmigen Folien im Rolle-zu-Rolle-Prozess sind dem Fachmann bekannt. Die Beschichtung der Vorder- und Rückseite der Membran kann durch verschiedene Verfahren erfolgen. Beispiele sind unter anderem Siebdruck, Schablonendruck, Rasterdruck, Offsetdruck, Transferdruck, Rakeln, oder Sprühen. Mit dem Verfahren können Polymerelektrolytmembranen aus polymeren, perfluorierten Sulfonsäure-Verbindungen, dotierten Polybenzimidazolen, Polyetherketonen oder Polysulfonen in der Säureform oder in der Alkaliform verarbeitet werden. Auch Compositmembranen und keramische Membranen sind einsetzbar.

Geeignete kontinuierliche Trocknungsverfahren sind unter anderem Heißlufttrocknung, Infrarot-Trocknung, Mikrowellentrocknung, Plasmverfahren und/oder Kombinationen aus diesen Verfahren. Das Trocknungsprofil (Temperatur und Zeit) wird prozessspezifisch gewählt. Geeignete Temperaturen liegen zwischen 20 und 150°C, geeignete Trocknungszeiten bei 1 bis 30 Minuten.

Die Elektrodenschichten auf den beiden Seiten der Membran können voneinander verschieden sein. Sie können aus unterschiedlichen Katalysatortinten aufgebaut sein und unterschiedliche Katalysatoranteile und Edelmetallbeladungen (mg Pt/cm$^2$) besitzen. In den Tinten können unterschiedliche Elektrokatalysatoren (z.B. edelmetallhaltige oder unedelmetallhaltige Trägerkatalysatoren, Pt- oder PtRu-Katalysatoren sowie ungeträgerte Mohre) zum Einsatz kommen, je nachdem für welche Brennstoffzellen die CCMs bzw. MEEs eingesetzt werden.

Die folgenden Beispiele sollen das erfindungsgemäße Verfahren näher erläutern.

**Beispiel 1:**

Für die Anfertigung einer Membran-Elektrodeneinheit gemäß dem erfindungsgemäßen Verfahren wurde eine Katalysatortinte mit folgender Zusammensetzung verwendet:

| Zusammensetzung der Katalysatortinte (Anode und Kathode): | |
|---|---|
| 15, 0 g | Pt-Trägerkatalysator (40 Gew.-% Pt auf Ruß, Fa. OMG) |
| 44,0 g | Nafion®-Lösung (11,4 Gew.-% in Wasser) |
| 41,0 g | Propylenglykol |
| 100, 0 g | |

Ein 30 cm breites und 50 m langes Band einer Polymerelektrolytmembran (Nafion® 112, Fa. DuPont; H$^+$-Form, 50 µm Dicke), die auf einer Seite durch eine auflaminierte Folie aus Polyester (50 µm Dicke) gestützt ist, wird in einer kontinuierlichen, von Rolle zu Rolle laufenden Beschichtungsanlage (Aufbau wie in EP 1 037295 beschrieben) zunächst auf der Vorderseite mit der Katalysatortinte im Siebdruckverfahren beschichtet. Die Fläche der Beschichtung beträgt 225 cm$^2$ (Abmessungen der aktiven Fläche: 15 x 15 cm). Nach dem Druck wird die beschichtete Membran in einem kontinuierlichen Banddurchlauftrockner mit Heißluft getrocknet und mit einem Aufwickler aufgerollt.

Nach der Beschichtung der ersten Seite wird eine zweite, perforierte Stützfolie (Polyester, 12 Löcher/cm$^2$, Lochdurchmesser 0,5 mm) auf die bereits beschichtete Vorderseite auflaminiert. Die beschichtete Membran wird dazu einer Laminiereinheit (bestehend aus einer Rolle zu Rolle-Laminiermaschine mit Auf- und Abwickeleinheit, Antriebsrollen, Walzen etc.) faltenfrei zugeführt und positioniert. Parallel hierzu erfolgt die passergenaue Zuführung der zweiten Stützfolie. Das Verbinden der zweiten Stützfolie mit der Membran erfolgt über eine temperierte Walze. Anschließend wird die erste Stützfolie von der Membran delaminiert und aufgewickelt.

Nach der Umlaminierung erfolgt die passergenaue Rückseitenbeschichtung der gestützten Membran mit der gleichen Katalysatortinte in einem Einfachdruck. Das Trocknungsprofil wird auf eine Maximaltemperatur von 75°C und eine Gesamttrocknungszeit von 5 min eingestellt.

Anschließend wird die perforierte zweite Stützfolie durch Delaminieren entfernt, die katalysatorbeschichtete bandförmige Membran (CCM) in 80°C warmem vollentsalzten Wasser (VE-Wasser) gewässert, anschließend getrocknet und aufgewickelt. Die so hergestellten CCMs weisen in ihrer aktiven Fläche eine Gesamtplatinbeladung von 0,6 mg Pt/cm$^2$ auf (0,2 mg Pt/cm$^2$ auf der Anode, 0,4 mg Pt/cm$^2$ auf der Kathode).

Zur elektrochemischen Prüfung wird aus einer beschichteten Membranfläche eine aktive Fläche von 7 x 7 cm (50 cm$^2$) herausgeschnitten und diese CCM zu einer 5-lagigen Membranelektroden-Einheit (MEE) verarbeitet. Hierzu bringt man auf beiden Seiten der CCM hydrophobiertes Kohlefaserpapier (Typ Toray TGPH-060; Dicke 200µm) an , verbindet das Gebilde durch Heisspressen und baut die so hergestellte MEE in eine PEMFC-Einzelzelle ein.

Bei den Leistungstests wird als Anodengas Wasserstoff (H$_2$), als Kathodengas Luft eingesetzt. Die Zelltemperatur beträgt 75°C. Die Anoden- und Kathodenbefeuchtung wird bei 75°C vorgenommen. Der Druck der Arbeitsgase ist 1,5 bar (absolut). Die gemessene Zellspannung der MEE beträgt 720 mV bei einer Stromdichte von 600 mA/cm$^2$. Dies entspricht einer Leistung von etwa 0,43 W/cm$^2$.

**Beispiel 2:**

Es wird eine MEE zur Verwendung in einer Direktmethanolbrennstoffzelle (DMFC) hergestellt. Als Membran kommt eine extrudierte Ionomermembran mit 87,5 µm Dicke in Bandform zum Einsatz, die zunächst auf eine erste Stützfolie aus Polyester auflaminiert wird. Die Polymerelektrolyt-Membran wird dann auf der Vorderseite mit einer Anodentinte beschichtet, die folgende Zusammensetzung besitzt:

| Zusammensetzung der Anodentinte: | |
|---|---|
| 15, 0 g | PtRu-Trägerkatalysator (60 Gew.-% PtRu auf Ruß; Katalysator entsprechend US 6,007,934) |
| 60,0 g | Nafion®-Lösung (10 Gew.-% in Wasser) |
| 15,0 g | Wasser (vollentsalzt) |
| 10,0 g | Propylenglykol |
| 100, 0 g | |

Das Druckformat beträgt 7 x 7 cm (aktive Fläche 50 cm$^2$). Nach dem Druck wird die beschichtete Membran in einem kontinuierlichen Banddurchlauftrockner mit Heißluft getrocknet und mit einem Aufwickler aufgerollt.

Nach der Beschichtung der ersten Seite wird eine zweite perforierte Stützfolie (Polyester, 12 Löcher/cm$^2$, Lochdurchmesser 0,5 mm) auf die bereits beschichtete Vorderseite auflaminiert. Die beschichtete Membran wird dazu einer Laminiereinheit faltenfrei zugeführt und positioniert. Parallel hierzu erfolgt die passergenaue Zuführung der zweiten Stützfolie. Das Verbinden der zweiten Stützfolie mit der Membran erfolgt über eine temperierte Walze. Anschließend wird die erste Stützfolie von der Membran delaminiert und aufgewickelt.

Die Rückseitenbeschichtung der gestützten Membran wird mit der Pt-Katalysatortinte aus Beispiel 1 in einem Einfachdruck ausgeführt. Das Trocknungsprofil wird auf eine Maximaltemperatur von 75°C und eine Gesamttrocknungszeit von 5 min eingestellt. Anschließend wird die bandförmige katalysatorbeschichtete Membran (CCM) mit der perforierten Stützfolie in 80°C warmem vollentsalzten Wasser (VE-Wasser) gewässert, getrocknet und sodann aufgewickelt. Die Edelmetallbeladung der katalysatorbeschichteten Membran beträgt 1 mg PtRu/cm$^2$ auf der Anode sowie 0,6 mg Pt/cm$^2$ auf der Kathode.

Zur Herstellung von 5-lagigen MEEs entfernt man die perforierte zweite Stützfolie, vereinzelt die CCMs und bringt jeweils zwei Gasverteilersubstrate (bestehend aus hydrophobiertem Kohlefaserpapier) auf den Vorder- und Rückseiten der CCMs an. Anschließend stellt man den Verbund durch Heißpressen bei 140°C und einem Druck von 60 bar her.

Diese MEEs werden in einem DMFC-Brennstoffzellen-Prüfstand untersucht, wobei die aktive Zellfläche 50 cm$^2$ beträgt. Als Kathodengas wird Luft eingesetzt. Es ergibt sich eine mittlere maximale Leistungsdichte von 65 mW/cm$^2$ (2-molare MeOH Lösung, Zell-temperatur 60°C).

**Patentansprüche**

1.   Verfahren zur Herstellung einer dreilagigen, auf Vorder- und Rückseite mit Katalysator beschichteten Polymerelektrolytmembran unter Verwendung von katalysatorhaltigen Tinten,
**dadurch gekennzeichnet, daß**
d ie Polymerelektrolytmembran in allen Verfahrensstufen mit mindestens einer Stützfolie verbunden ist.

2.   Verfahren nach Anspruch 1,
**dadurch gekennzeichnet, daß**
es kontinuierlich betrieben wird und sowohl die Polymerelektrolytmembran als auch die mindestens eine Stützfolie in Bandform vorliegt.

3.   Verfahren nach Anspruch 1 oder 2,
**dadurch gekennzeichnet, daß**
nach der Beschichtung der Vorderseite der mit einer ersten Stützfolie auf der Rückseite verbundenen Polymerelektrolytmembran eine zweite Stützfolie auf der Vorderseite der Polymerelektrolytmembran angebracht, die erste Stützfolie von der Rückseite der Polymerelektrolytmembran entfernt und anschließend die Beschichtung der Rückseite der Polymerelektrolytmembran durchgeführt wird.

4.   Verfahren nach einem der Ansprüche 1 bis 3,
**dadurch gekennzeichnet, daß**
mindestens eine Stützfolie durch Laminieren im Randbereich der mit Katalysator beschichteten Polymerelektrolytmembran befestigt wird.

5.   Verfahren nach einem der Ansprüche 1 bis 4,

**dadurch gekennzeichnet, daß**
mindestens eine Stützfolie perforiert ist.

6. Verfahren nach einem der Ansprüche 1 bis 5,
**dadurch gekennzeichnet,**
**daß** die Polymerelektrolytmembran aus polymeren, perfluorierten Sulfonsäure-Verbindungen, dotierten Polybenzimidazolen, Polyetherketonen, Polysulfonen oder anderen protonenleitenden Materialien besteht und eine Dicke von 10 bis 200 μm aufweist.

7. Verfahren nach einem der Ansprüche 1 bis 6,
**dadurch gekennzeichnet,daß**
die mindestens eine Stützfolie aus Polyester, Polyethylen, Polypropylen, Polycarbonat, Polytetratfluorethylen, Polyurethan, Polyamid, Polyimid, Papier oder vergleichbaren Materialien besteht und eine Dicke von 10 bis 250 μm aufweist.

8. Verfahren nach einem der Ansprüche 1 bis 7,
**dadurch gekennzeichnet,**
**daß** als Beschichtungsverfahren Siebdruck, Offset-Druck, Schablonendruck, Rasterdruck, Rakeln oder Sprühen verwendet werden.

9. Verfahren nach einem der Ansprüche 1 bis 8,
umfassend die Schritte

(a) Beschichten der auf der Rückseite mit einer ersten Stützfolie versehenen Polymerelektrolytmembran mit einer katalysatorhaltigen Schicht und Trocknung,
(b) Anbringen einer zweiten Stützfolie auf der Vorderseite der Polymerelektrolytmembran,
(c) Entfernen der ersten Stützfolie von der Rückseite der Polymerelektrolytmembran,
(d) Beschichten der Rückseite der Polymerelektrolytmembran mit einer katalysatorhaltigen Schicht und Trocknung.

10. Verfahren nach Anspruch 9, weiterhin umfassend
das Anbringen einer ersten Stützfolie auf der Rückseite einer ungestützten Polymerelektrolytmembran.

11. Verfahren nach Anspruch 9, weiterhin umfassend
die Entfernung der zweiten Stützfolie nach der Beschichtung der Rückseite der Polymerelektrolytmembran.

12. Verfahren nach Anspruch 9, weiterhin umfassend
die Verwendung eines Haftvermittlers zwischen Stützfolie und Polymerelektrolytmembran.

13. Verfahren nach Anspruch 9, weiterhin umfassend
eine Nachbehandlung der beschichteten Polymerelektrolytmembran in Wasser bei Temperaturen zwischen 20 und 95°C.

14. Verfahren nach einem der Ansprüche 1 bis 8,
**dadurch gekennzeichnet,**
**daß** die Trocknung der Katalysatorschichten mit Hilfe von Heißluft, Infrarot, Mikrowelle, Plasma oder mit Kombinationen davon erfolgt.

15. Verfahren nach einem der Ansprüche 1 bis 8,
**dadurch gekennzeichnet,**
**daß** die Trocknungstemperatur zwischen 20 und 150°C und die Trocknungsdauer zwischen 1 und 30 Minuten liegt.

16. Dreilagige, auf Vorder- und Rückseite mit Katalysator beschichtete Polymerelektrolytmembran mit einer Stützfolie auf der Vorderseite, erhältlich durch das Verfahren nach den Ansprüchen 1 bis 8.

17. Verwendung der nach dem Verfahren gemäß den Ansprüchen 1 bis 8 hergestellten beschichteten Polymerelektrolytmembran in Membran-Elektroden-Einheiten für elektrochemische Vorrichtungen.

**18.** Vorrichtung zur Herstellung einer dreilagigen, auf Vorder- und Rückseite mit Katalysator beschichteten Polymerelektrolytmembran unter Verwendung von katalysatorhaltigen Tinten, insbesondere zur Durchführung eines Verfahren nach einem der Ansprüche 1 bis 15, mit:

einer Einrichtung zum Stützen der Polymerelektrolyt-Membran in allen Verfahrensstufen mit mindestens einer Stützfolie.

**Figur 1**

**Europäisches Patentamt**

**EUROPÄISCHER RECHERCHENBERICHT**

Nummer der Anmeldung

EP 03 01 4405

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 2002/064593 A1 (DIEHL MANFRED ET AL) 30. Mai 2002 (2002-05-30)<br><br>* Absatz [0019] - Absatz [0032] *<br>* Absatz [0055] *<br>* Absatz [0062] - Absatz [0068] *<br>* Abbildung 3 *<br>* Anspruch 18 *<br>----- | 1-4, 6-11,13, 14,16-18 | H01M4/88 H01M8/10 |
| A | PATENT ABSTRACTS OF JAPAN Bd. 1995, Nr. 10, 30. November 1995 (1995-11-30) & JP 7 176317 A (SANYO ELECTRIC CO LTD), 14. Juli 1995 (1995-07-14) * Zusammenfassung *<br>----- | 1-18 | |
| A | WO 03/036748 A (DU PONT ; O'BRIEN WILLIAM GEORGE (US)) 1. Mai 2003 (2003-05-01) * das ganze Dokument *<br>----- | 1-18 | |

RECHERCHIERTE SACHGEBIETE (Int.Cl.7)

H01M

Der vorliegende Recherchenbericht wurde für alle Patentansprüche erstellt

| Recherchenort | Abschlußdatum der Recherche | Prüfer |
|---|---|---|
| München | 11. Februar 2004 | Götz, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 03 01 4405

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-02-2004

| Im Recherchenbericht angeführtes Patentdokument | Datum der Veröffentlichung | Mitglied(er) der Patentfamilie | Datum der Veröffentlichung |
|---|---|---|---|
| US 2002064593 A1 | 30-05-2002 | DE 10050467 A1<br>BR 0104520 A<br>CA 2358636 A1<br>EP 1198021 A2<br>JP 2002184425 A | 16-05-2002<br>21-05-2002<br>12-04-2002<br>17-04-2002<br>28-06-2002 |
| JP 7176317 A | 14-07-1995 | KEINE | |
| WO 03036748 A | 01-05-2003 | WO 03036748 A2 | 01-05-2003 |

EPO FORM P0461

Für nähere Einzelheiten zu diesem Anhang : siehe Amtsblatt des Europäischen Patentamts, Nr.12/82